(19)

**Europäisches Patentamt**
**European Patent Office**
**Office européen des brevets**

(11) **EP 2 368 227 B1**

(12) **EUROPÄISCHE PATENTSCHRIFT**

(45) Veröffentlichungstag und Bekanntmachung des Hinweises auf die Patenterteilung:
**23.10.2013 Patentblatt 2013/43**

(21) Anmeldenummer: **08874933.8**

(22) Anmeldetag: **05.12.2008**

(51) Int Cl.:
***G06T 7/00*** *(2006.01)*

(86) Internationale Anmeldenummer:
**PCT/DE2008/002044**

(87) Internationale Veröffentlichungsnummer:
**WO 2010/063247 (10.06.2010 Gazette 2010/23)**

(54) **VERFAHREN UND VORRICHTUNG ZUR KANTENBASIERTEN SEGMENTIERUNG VON DATEN**

METHOD AND APPARATUS FOR EDGE-BASED SEGMENTATION OF DATA

PROCEDE ET PROCESSUS DE SEGMENTATION DE DONNEES BASEE SUR LES CONTOURS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**28.09.2011 Patentblatt 2011/39**

(73) Patentinhaber: **Helmholtz-Zentrum Potsdam Deutsches GeoForschungsZentrum - GFZ 14473 Potsdam (DE)**

(72) Erfinder:
• **HÜTTL, Reinhard**
  **13465 Berlin (DE)**
• **SCHNEIDER, Bernd**
  **12249 Berlin (DE)**
• **ROGASS, Christian**
  **14469 Potsdam (DE)**

(74) Vertreter: **Reinders, Christian Adares Schumannstraße 2 10117 Berlin (DE)**

(56) Entgegenhaltungen:
EP-A1- 1 603 076     WO-A1-2005/083635
US-A- 6 031 935      US-A1- 2003 052 883
US-A1- 2006 013 482

• KASS M; WITKIN A; TERZOPOULOS D: "SNAKES : ACTIVE CONTOUR MODELS" INTERNATIONAL JOURNAL OF COMPUTER VISION, DORDRECHT, NL, 1. Januar 1988 (1988-01-01), Seiten 321-331, XP000675014 in der Anmeldung erwähnt
• SIDDIQI K; VASILEVSKIY A: "Flux maximizing geometric flows" IEEE TRANSACTIONS ON PATTERN ANALYSIS AND MACHINE INTELLIGENCE, IEEE SERVICE CENTER, LOS ALAMITOS, CA, US, Bd. 24, Nr. 12, 1. Dezember 2002 (2002-12-01), Seiten 1565-1578, XP011095247 ISSN: 0162-8828

EP 2 368 227 B1

**Beschreibung**

Die Erfindung betrifft ein Verfahren zur kantenbasierten Segmentierung von Daten durch Ermittlung einer Energiefunktion $E(\underline{v}_t)$ einer parametrisch geschlossenen Fläche $\underline{v}_t$ bezüglich einer geschlossenen Kante in den Daten mit einer von der parametrisch geschlossenen Fläche $\underline{v}_t$ abhängigen inneren Energiefunktion $E_{int}(\underline{v}_t)$ und einer datenabhängigen Energiefunktion $E_{ext}(\underline{v}_t)$.

Ein immerwährendes Problem in der medizinischen Diagnostik, der Fernerkundung, der Produktionstechnik oder der Zahlenanalyse ist die automatische Erkennung von Mustern innerhalb eines Satzes von Daten, die eine geschlossene Struktur als Kante, insbesondere als Objektkante, aufweisen. Die Kante ist durch einen großen Werteunterschied in den Daten gekennzeichnet, beispielsweise durch einen Intensitätsunterschied einzelner Pixelpunkte entlang eines Objektumrisses innerhalb eines digitalen Bildes oder durch Wertedifferenzen zwischen Daten entlang einer Kante zu umgebenden Datenwerten innerhalb einer Zahlenmatrix.

Eine wesentliche Methode zur Ermittlung eines Musters aufgrund einer äußeren geschlossenen Kante um das Muster ist die Bestimmung der Objektkontur mittels sogenannter aktiver Konturen, auch Snakes genannt. Aktive Konturen werden zur computergestützten Objektverfolgung eingesetzt und sind invariant bezüglich Skalierungen und Rotationen. Das Konzept der aktiven Kontur oder Snakes wurde erstmals 1987 publiziert (M. Kass, A. Witkin and D. Terzopoulos "Snakes-active contour models", Int. J. Comput. Vis., vol. 1, pp. 321, 1987).

Das Konzept der aktiven Konturen beruht auf der Beschreibung der Objektkontur durch eine geschlossene parametrische Fläche im dreidimensionalen bzw. durch eine geschlossene parametrische Kurve im zweidimensionalen entlang der Objektkante. Deren Form wird nach einer oft manuellen Initialisierung abhängig von sogenannten internen und externen Energien korrigiert. Im Falle einer Übereinstimmung der geschlossenen parametrischen Kurve mit der Objektkante heben sich die inneren und äußeren Energien so auf, so dass die Gesamtenergie minimal ist.

Die äußeren Energien werden aus den Dateninformationen, beispielsweise den Bildinformationen, ermittelt und dienen zur Form- und Positionsveränderung der aktiven Kontur innerhalb der Daten im Bezug auf die Objektkontur. Die äußeren Energien werden häufig in Vektorfelder umgerechnet, beispielsweise dem Gradient Vector Flow (GVF) oder der Vector Field Convolution (VFC).

Die internen Energien berechnen sich einzig aus der Form der aktiven Kontur. Eine auf den inneren Energien basierende Kraft ist dann elastisch, wenn beim Wegfall aller äußeren Kräfte bzw. Energiefunktionen die aktive Kontur sich selbst in den Ausgangszustand zurückversetzen würde. Unelastische Eigenschaften sind beispielsweise Viskosität, Plastizität oder Brüchigkeit. Mittels eines Minimierungsalgorithmuses wird die Form der aktiven Kontur berechnet, bei der die Summe aller Energien im Idealfall ein Minimum erreicht. Häufig wird anstatt dass Minimum der Gesamtenergie zu betrachten die Form der aktiven Kontur verändert und dann diejenige Form der aktiven Kontur als Ergebnis betrachtet, bei der die zugehörige Gesamtenergie minimal ist.

Wichtige Voraussetzung für die Ermittlung einer Objektkontur mit einer aktiven Kontur ist, dass die aktive Kontur durch eine geschlossene parametrische Fläche bzw. Kurve beschrieben werden kann, die zweimal steig differenzierbar sein muss. Mit dem Wissen um die grobe Gestalt der zu erfassenden Objektkontur kann aus der ersten Ableitung der Kurve auf die "Objektkonturlänge" und aus der zweiten Ableitung auf die "Objektkonturglattheit" geschlossen werden, also ob beispielsweise starke Krümmungen in der Objektkontur vorliegen. Die Parameter $\omega_1$, $\omega_2$ dienen zur Abbildung dieser Vorabinformationen der Objektstruktur in der inneren Energie $E_{int}$ entlang der Objektkante:

$$E_{int}(\underline{v}) := \frac{1}{2} \int_0^1 \omega_1 \left| \frac{\partial \underline{v}}{\partial s} \right|^2 + \omega_2 \left| \frac{\partial \underline{v}}{\partial s} \right|^2 ds$$

Zur Abbildung der Dateninformationen wird die Objektkontur mittels einer Kante beschrieben, die durch eine große Veränderung $\nabla I(x, y, z)$ gekennzeichnet ist. Hieraus ergibt sind die äußere Energie $E_{ext}$ zu

$$E_{ext}(x, y, z) := -\omega_3 \nabla I(x, y, z) \quad .$$

Die äußere Energie $E_{ext}$ entlang der Objektkante ergibt sich zu:

$$E_{ext}(\underline{\mathbf{v}}) := \int_0^1 E_{ext}(\underline{\mathbf{v}}(s))ds$$

Die Gesamtenergie E aus der inneren und äußeren Energie $E_{int}$ und $E_{ext}$ ergibt sich zu:

$$E(\underline{\mathbf{v}}) := \frac{1}{2}\int_0^1 \omega_1\left|\frac{\partial \underline{\mathbf{v}}}{\partial s}\right|^2 + \omega_2\left|\frac{\partial \underline{\mathbf{v}}}{\partial s}\right|^2 ds + \int_0^1 E_{ext}(\underline{\mathbf{v}}(s))ds$$

Das Minimum dieser Grundgleichung der Gesamtenergie E($\underline{\mathbf{v}}$) entlang der Objektkante stellt die optimale Übereinstimmung der aktiven Kontur $\underline{\mathbf{v}}_t$ mit der Objektkante dar.

So beschreibt die US 5,768,313 A ein Verfahren und eine Vorrichtung zur Segmentierung von Bildern mittels einer stochastisch deformierbaren aktiven Kontur. Mittels eines Deformationsgenerators wird die aktive Kontur solange deformiert, bis die zugehörige Funktion der Gesamtenergie minimal ist.

Die DE 199 15 858 A1 beschreibt ein Verfahren zur Verringerung von Rauschen in Bildern unter Beibehaltung der Kanteninformation, damit die Objektkante weiterhin mittels einer aktiven Kontur ermittelt werden kann. Aus einem Satz von mehrdimensionalen Bildern mit Volumenelementen wird für jeden Wert eines Volumenelements eine Vielzahl von ersten und zweiten Ableitungen bestimmt. Aus dem Vergleich der Ableitungen wird eine sogenannte Krümmungsmatrix abgeleitet, wobei in Abhängigkeit der Vorzeichen der Krümmungen der jeweiligen Volumenelemente die Volumenelementwerte angepasst werden.

Die DE 103 58 544 A1 beschreibt ein Verfahren zur schnellen 3D-Objekterfassung. Gemäß dieser Patentanmeldung wird das Objekt mittels eines Projektors aus gitterförmig angeordneten Linien beleuchtet und die auf der Oberfläche des Objektes abgebildeten Streifen über eine Kamera aufgenommen. Durch die Ermittlung der Streifen und der damit verbundenen Schnittpunkte werden die dreidimensionalen Koordinaten der Objektoberfläche bestimmt.

Ebenfalls beschreibt die US 6,031,935 A eine Methode und eine Vorrichtung zur Bildsegmentierung mittels zeitkonstant deformierbarer Konturen. Mit Hilfe einer zusätzlichen Testkontur wird die Objektkante durch die Anpassung der aktiven Kontur ermittelt.

Die WO 2005/083635A1 offenbart ein System und eine Methode zur Ermittlung von Knochenfrakturen. Gemäß der dortigen Erfindung werden digitatlisierte Röntgenaufnahmen mittels eines Snake-Algorithmuses bearbeitet und anschließend ein Vektorfeld - Gradient Vector Flow (GVF) - errechnet.

Ein System und eine Methode zur digitalen Organsegmentierung von Körperaufnahmen offenbart die US 2006/0013482 A1. Die EP 1 603 076 A1 offenbart ein computerisiertes Grenzextratktionsverfahren für Magnetresonanztomographieaufnahmen des Cortex. Die US 2003/052883 A1 offenbart ein Grenzextraktionssystem mittels eines Modules zur Anpassung von Grenzen auf die Oberfläche eines Objektes.

Problematisch an allen Lösungen gemäß Stand der Technik ist, dass die Anpassung der aktiven Kontur an die Objektkante nur mit einer großen Anzahl von Iterationen durchgeführt werden kann, die eine Vielzahl von Rechenressourcen verbrauchen.

Der Erfindung liegt daher die Aufgabe zugrunde, eine schnelle und ressourcensparende Ermittlung einer Objektkante mittels einer aktiven Kontur bereitzustellen.

Erfindungsgemäß wird die Aufgabe durch ein Verfahren mit den Merkmalen nach Anspruch 1 gelöst.

Erfindungsgemäß wird die Aufgabe ebenfalls durch eine Vorrichtung mit den Merkmalen nach Anspruch 11 gelöst. Erfindungsgemäß ist ein Verfahren zur kantenbasierten Segmentierung von Daten vorgesehen, bei dem eine Energiefunktion E($\underline{\mathbf{v}}_t$) einer parametrisch geschlossenen Fläche $\underline{\mathbf{v}}_t$ bezüglich einer geschlossenen Kante in den Daten mit einer von der parametrisch geschlossenen Fläche $\underline{\mathbf{v}}_t$ abhängigen inneren Energiefunktion $E_{int}(\underline{\mathbf{v}}_t)$ und einer datenabhängigen Energiefunktion $E_{ext}(\underline{\mathbf{v}}_t)$ ermittelt wird.

Objektkante oder Kante im Sinne der vorliegenden Erfindung ist ein großer Werteunterschied in den Daten bzw. sind gleiche Datenwerte entlang einer geschlossenen parametrischen Kurve um ein in den Daten abgebildetes Datenwertsegment. Eine Kante kann beispielsweise ein Intensitätsunterschied entlang der Umrisse eines abgebildeten Objektes innerhalb eines Bildes sein oder über eine minimale Wertedifferenz hinausgehende Datenwertdifferenz entlang einer geschlossenen Kante innerhalb einer Zahlenmatrix. Auch gleiche Datenwerte entlang einer geschlossenen Fläche bzw. Kurve in den Daten bilden eine Kante im Sinne der vorliegenden Erfindung. Die vorliegende Erfindung kann daher exemplarisch und nicht einschränkend in der Mustererkennung in der medizinischen Diagnostik, in der Objekterkennung in der Produktionstechnik oder der Zahlentheorie zur Anwendung kommen. Auch die Objektverfolgung in der Fernerkundung oder die biometrische Erfassung von Personen kann mit Hilfe der vorliegenden Erfindung umgesetzt werden.

Zu der inneren Energiefunktion $E_{int}(\underline{v}_t)$ wird eine auf Aufblähkräften basierende zusätzliche Energiefunktion $E_{add}(\underline{v}_t)$ hinzugefügt. Ohne eine auf Aufblähkräften basierende zusätzliche Energiefunktion $E_{add}(\underline{v}_t)$ besteht häufig das Problem, dass die aktive Kontur nicht entlang der Objektkante konvergiert, wenn die initiale aktive Kontur nicht nahe genug entlang der Objektkontur verläuft. Ohne Aufblähkräfte tendiert die aktive Kontur dazu, zu schrumpfen und wieder in sich zusammenzufallen. Des Weiteren ist ohne Aufblähkräfte die Konvergenz der aktiven Kontur entlang der Kante von der ursprünglichen Parameterwahl von $\omega_1$ und $\omega_2$ bzw. hierzu entsprechenden Parametern stark abhängig.

Aus der datenabhängigen Energiefunktion $E_{ext}(\underline{v}_t)$ wird ein Vektorfeld abgeleitet, so dass die aktive Kontur in Richtung der Kante bei jeder Iteration verändert wird. Gleichzeitig besitzt die aktive Kontur $\underline{v}_t$ mittels der inneren Energiefunktion $E_{int}(\underline{v}_t)$ die Tendenz, sich zusammenzuziehen. Die Gesamtenergiefunktion wird dann minimal, wenn sich die innere Energiefunktion $E_{int}(\underline{v}_t)$ nahezu vollständig mit der datenabhängigen Energiefunktion $E_{ext}(\underline{v}_t)$ aufhebt und in diesem Falle die energieabhängige aktive Kontur $\underline{v}_t$ nahezu vollständig entlang der Kante verläuft. Hierzu wird die Gesamtenergiefunktion $E(\underline{v}_t)$ aus der datenabhängigen

Energiefunktion $E_{ext}(\underline{v}_t)$ und aus der inneren Energiefunktion $E_{int}(\underline{v}_t)$ bestimmt. Vorteilhafterweise werden die innere Energiefunktion $E_{int}(\underline{v}_t)$ und die datenabhängige Energiefunktion $E_{ext}(\underline{v}_t)$ auf der Basis der veränderten parametrisch geschlossenen Fläche $\underline{v}_t$ bei jeder Iteration dergestalt verändert, dass bezogen auf die vorhergehende Iteration die Magnitude und das Vorzeichen der insgesamt wirkenden Kraft variiert werden. Im Falle einer minimalen Energiefunktion $E[\underline{v}_t(x, y, z, t)]$ bezüglich der geschlossenen Kante in den Daten wird die optimale parametrisch geschlossene Fläche $\underline{v}_{opt}$ ausgegeben.

Durch das vorliegende Verfahren werden aktive Konturen mit wesentlich weniger Iterationsschritten als bisher entlang einer Objektkante ausgerichtet. Dies wird durch die Schaffung des methodischen Ansatzes einer alternativen Vektorfeldüberlagerung - Alternating Vector Field Convolution Snakes (AVFC) - zur Berechnung der aktiven Kontur erreicht.

In einer vorteilhaften Ausgestaltung des Verfahrens ist vorgesehen, dass die veränderte parametrisch geschlossene Fläche $\underline{v}_{t-1}$ bei einer ersten Iteration bezüglich der auf Aufblähkräften basierenden zusätzlichen Energiefunktion $E_{add}(\underline{v}_{t-1})$ auf der Basis vergrößernder Aufblähkräfte berechnet wird und die so veränderte parametrisch geschlossene Fläche $\underline{v}_{t-1}$ als Ausgangsfläche bei einer nachfolgenden Iteration auf der Grundlage der auf Aufblähkräften basierenden zusätzlichen Energiefunktion $E_{add}(\underline{v}_t)$ mit verkleinernden Aufblähkräften als Teil der datenabhängigen Energiefunktion $E_{ext}(\underline{v}_t)$ genutzt wird. Durch die Verwendung der bei der vorherigen Iteration berechneten Ausgangsfläche $\underline{v}_{t-1}$ für die im nachfolgenden Iterationsschritt berechneten parametrisch geschlossenen Fläche $\underline{v}_t$ wird ein "Zusammenschrumpfen" der aktiven Kontur $\underline{v}_t$ aufgrund der wirkenden inneren Energiefunktion $E_{int}(\underline{v}_t)$ verhindert.

Es wird als Vorteil angesehen, dass die Aufblähkräfte der zusätzlichen Energiefunktion $E_{add}(\underline{v}_t)$ an die jeweiligen Iterationsschritte dynamisch angepasst werden. Bisher mussten die Aufblähkräfte der zusätzlichen Energiefunktion $E_{add}(\underline{v}_t)$ in einigen Iterationsverfahren vom Anwender immer dann manuell angepasst werden, wenn der Ausgangsparametersatz ersichtlich zu keiner Konvergenz der aktiven Kontur als parametrisch geschlossene Fläche $\underline{v}_t$ entlang der Objektkante führte. Da mit fortschreitenden Iterationsschritten und der Annäherung der aktiven Kontur an der Objektkante zu groß gewählte Aufblähkräfte zu Konvergenzschwierigkeiten führen, ist durch die Abhängigkeit der Größe der Aufblähkräfte von den Iterationsschritten eine automatische Rückkopplung auf den Konvergenzprozess geschaffen, die kein manuelles Eingreifen des Anwenders mehr erfordert.

Die datenabhängige Energiefunktion $E_{ext}(\underline{v}_t)$ bezogen auf die geschlossene Kante in den Daten wird auf der Basis des Yukawa-Potentials ermittelt. Das Yukawa-Potential ist das Potential eines Austauschteilchens mit der Masse m und geht mit wachsendem Abstand r exponentiell gegen Null und besitzt die Form $V(\mathbf{r}) = A\dfrac{e^{-mc|\mathbf{r}|/\hbar}}{|\mathbf{r}|}$ . Das Yukawa-Potential geht im Grenzfall eines massenlosen Photons in das Coulomb-Potential über.

Bei der Nutzung des Yukawa-Potentials als Teil der datenabhängigen Energiefunktion $E_{ext}(\underline{v}_t)$ zur Berechnung der parametrisch geschlossenen Fläche $\underline{v}_t$ wird bei der Initialisierung der parametrisch geschlossenen Fläche $\underline{v}_0$ die aktive Kontur rasch verändert. Mit fortschreitender Form- und Größenänderung der parametrisch geschlossenen Fläche $\underline{v}_t$ nimmt der Einfluss des Yukawa-Potentials ab und verbessert somit die Konvergenz der parametrisch geschlossenen Fläche $\underline{v}_t$ entlang der Objektkante.

Die parametrisch geschlossene Fläche $\underline{v}_t$ wird vorteilhafterweise mittels der nachfolgenden Gleichung zum jeweiligen Zeitpunkt t ermittelt:

$$\underline{v}_{t,j} = -\frac{1}{\gamma}\left((\underline{A}_j + \gamma\underline{I}_j)\underline{v}_{t-1,j} + \frac{-1^j\,k_1\,res_o}{res_j\sqrt{i_j}}\,\underline{n}_j(\underline{v}) - k\,\frac{f_j(\underline{v})\otimes\frac{-\underline{v}}{|\underline{v}|^2 e^{|b\cdot \underline{v}|}+\varepsilon_2}}{\left|f_j(\underline{v})\otimes\frac{-\underline{v}}{|\underline{v}|^2 e^{|b\cdot \underline{v}|}+\varepsilon_2}\right|}\right)$$

In der obigen Matrizendarstellung ist neben der zusätzlichen Energiefunktion $E_{add}$ ($\underline{v}_t$) der Aufblähkräfte in Abhängigkeit des $\underline{n}_j$ ($\underline{v}$)- Vektors als letzter Term auch das äquivalent formulierte Yukawa- Potential für das zugrundeliegende Variationsproblem dargestellt. Diese auf dem Yukawa- Potential basierende alternative Vektorfeldüberlagerung- Alternating Vector Field Convolution Snakes (YAVFC)- ist ein wesentlicher Kernpunkt der vorliegenden Erfindung.

In einer vorteilhaften Ausgestaltung des Verfahrens ist vorgesehen, dass die veränderte parametrisch ge- schlossene Fläche $\underline{v}_t$ als Matrix darstellbar und mittels algebraischer Operationen berechnet wird, wobei die Matrix in Submatrizen mit einer gleichen Anzahl von Zeilen und Spalten aufgeteilt und die jeweiligen Submatrizen als Grundlage zur Bestimmung der minimalen Energiefunktion $E(\underline{v}_t)$ verwendet werden. Insbesondere bei nummerischen Berechnungsverfahren ist eine algebraische Formulierung des zu lösenden Variationsproblems von Vorteil. Definierte Punkte auf der parametrisch geschlossene Fläche $\underline{v}_t$ werden mittels numerischer Berechnungsmethoden festgelegt und innerhalb des zu betrachtenden Volumens bzw. innerhalb der zu betrachtenden Fläche in jedem Iterationsschritt verschoben und damit an die Objektkante angepasst.

In einer vorteilhaften Ausgestaltung des Verfahrens ist vorgesehen, dass die Kantendaten entlang der geschlossenen Kante in Abhängigkeit der Datenwertunterschiede zu Daten nahe der geschlossenen Kante mittels einer Wölbungsfunktion multipliziert und damit die Datenwertunterschiede der Kantendaten angepasst werden. Die Kantendaten können relativ zu den umgebenden Daten mit der Wölbungsfunktion genauer abgegrenzt und somit der exakte Verlauf der Objektkante besser dargestellt und analysiert werden.

Zur Unterdrückung von Rauscheinflüssen auf die Berechnung der aktiven Kontur ist es von Vorteil, dass das Rauschsignal in den Daten mittels einer Filterfunktion, insbesondere eines Gauß-Filters oder eines Median-Filters, minimiert wird. Hierdurch kann die Objektkante genauer und schneller ermittelt werden. Ebenfalls ist es von Vorteil, dass die geschlossene Kante in den Daten als quadratische Normalfunktion eines Gauß-Filters oder als inverse Intensitätsfunktion der Daten erfasst wird.

Um unnötige weitere Iterationen zu vermeiden und damit Rechenressourcen zu schonen, wird bei Unterschrei- tung der Differenz $\Delta\underline{v}_t = \underline{v}_t - \underline{v}_{t-1}$ unter eine vorgebbare Schwelle die derzeitige parametrisch geschlossene Fläche $\underline{v}_t$ als optimale parametrisch geschlossene Fläche $\underline{v}_{opt}$ bestimmt.

Erfindungsgemäß ist ebenfalls eine Vorrichtung vorgesehen, bei der die Berechnungseinheit bei der Ermittlung der Energiefunktion $E(\underline{v}_t)$ eine auf Aufblähkräften basierende zusätzliche Energiefunktion $E_{add}(\underline{v}_t)$ zu der datenabhän- gigen Energiefunktion $E_{ext}(\underline{v}_t)$ berücksichtigt, wobei die Berechnungseinheit die Größe der Aufblähkräfte an die jeweilige Iteration dynamisch anpasst.

Die Berechnungseinheit führt vorteilhafterweise eine iterative Oszillation der inneren Energiefunktion $E_{int}(\underline{v}_t)$ und der datenabhängigen Energiefunktion $E_{ext}(\underline{v}_t)$ auf der Basis der veränderten parametrisch geschlossenen Fläche $\underline{v}_t$ durch. In einer vorteilhaften Ausgestaltung der Vorrichtung ist vorgesehen, dass die Berechnungseinheit die daten- abhängige Energiefunktion $E_{ext}(\underline{v}_t)$ bezogen auf die geschlossene Kante in den Daten auf der Basis des Yukawa- Potentials ermittelt.

Des Weiteren löst ein Computerprogramm und ein Computerprogrammprodukt die Aufgabe, wobei das Computerprogrammprodukt in einem computerlesbaren Medium gespeichert ist und computerlesbare Mittel umfasst, mittels derer ein Computer veranlasst wird, das erfindungsgemäße Verfahren durchzuführen, wenn das Programm in dem Computer abläuft. Die vorliegende Erfindung kann in Form von Hardware, Software oder einer Kombination von Hardware und Software realisiert werden. Hierfür ist jede Art von System bzw. jede andere zum Ausführen des erfindungsgemäßen Verfahrens eingerichtete Vorrichtung geeignet. Die vorliegende Erfindung kann auch in ein Computerprogrammprodukt integriert werden, welches alle Merkmale umfasst, die es zur Realisierung der hier beschriebenen computergestützten Verfahren befähigen, und welches nach dem Laden in ein Computersystem in der Lage ist, diese Verfahren auszuführen.

Unter den Begriffen Computerprogramm und Computerprogrammprodukt ist im vorliegenden Zusammenhang jeder Ausdruck in einer beliebigen Computersprache, Code oder Notation eines Satzes von Anweisungen zu verstehen, welche ein Computersystem zur Datenverarbeitung und so zur Ausführung einer bestimmten Funktion befähigen. Das Computerprogramm bzw. das Computerprogrammprodukt ist entweder direkt oder nach einer Umwandlung in eine andere Sprache, Code, Notation oder durch die Darstellung in einer anderen materiellen Form auf dem Computersystem lauffähig.

Weitere vorteilhafte Ausgestaltungen finden sich in den Unteransprüchen. Die vorliegende Erfindung wird anhand der

Ausführungsbeispiele in den Figuren näher erläutert. Dabei zeigt beispielhaft die

FIG 1    ein Ablaufdiagramm mit den wesentlichen Verfahrensschritten;

FIG 2    Ergebnisbilder vier verschiedener Objekte mit berechneten aktiven Konturen entlang der Objektkanten auf der Grundlagen eines Gradientenfeldes und Aufblähkräften;

FIG 3    Ergebnisbilder vier verschiedener Objekte mit berechneten aktiven Konturen entlang der Objektkanten auf der Grundlagen eines Gradientenfeldes, einer alternativen Vektorfeldüberlagerung und einer auf einem Yukawa-Potential basierenden alternativen Vektorfeldüberlagerung.

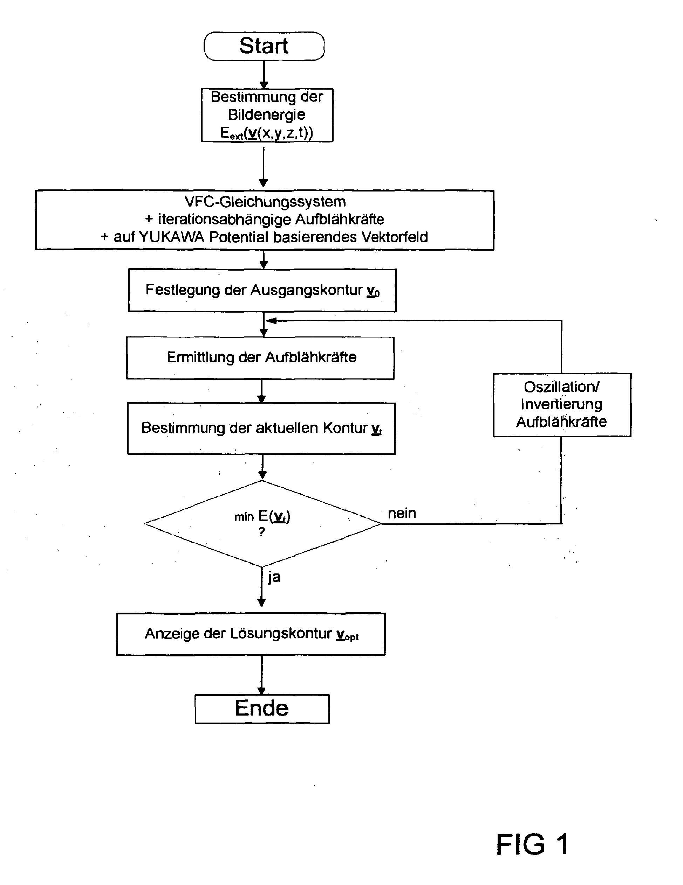

Die Fig. 1 zeigt ein Ablaufdiagramm mit den wesentlichen Verfahrensschritten. Nach der Initialisierung des Verfahrens wird die datenabhängige Energiefunktion $E_{ext}$ ($\underline{v}_t$) aus den Daten, im Falle der Fig. 1 die Intensitätsdaten innerhalb eines digitalen Bildes, ermittelt. Hierzu wird der jeweilige Intensitätswert jedes Pixelpunktes als Grundlage der datenabhängigen Energiefunktion $E_{ext}$ ($\underline{v}_t$) verwendet. Die ungefähre Form der Objektkante ist dabei nicht bekannt und wird durch die dynamische Anpassung der Parameter der inneren Energiefunktion $E_{int}$ ($\underline{v}_t$) und der datenabhängigen Energiefunktion $E_{ext}$ ($\underline{v}_t$) irrelevant. Auf der Basis einer bekannten Vektorfeldüberlagerung (VFC) werden iterationsabhängige Aufblähkräfte als Grundlage einer zusätzlichen Energiefunktion $E_{add}$ ($\underline{v}_t$) zur datenabhängigen Energiefunktion $E_{ext}$ ($\underline{v}_t$), die auf dem Yukawa- Potential basiert, hinzugefügt. In Abhängigkeit der ungefähr bekannten Objektkante wird dann die Ausgangskontur $\underline{v}_0$ festgelegt. Meistens positioniert der Anwender die Ausgangskontur $\underline{v}_0$ innerhalb oder in Nähe des zu erfassenden Objektes. Anschließend werden iterationsabhängig die Aufblähkräfte ermittelt und eine auf diesen Energiefunktionen basierende parametrisch geschlossene Kurve $\underline{v}_t$ bezüglich der zweidimensionalen Bilddaten berechnet. Danach wird die aktuelle parametrisch geschlossene Kurve $\underline{v}_t$ ermittelt. Falls ein Minimum der Gesamtenergie vorliegt, entspricht die aktuelle parametrisch geschlossene Kurve $\underline{v}_t$ der Objektkante. Sollte die Gesamtenergie nicht einem Minimum entsprechen, werden die Aufblähkräfte in Abhängigkeit der aktuellen Iteration verändert. Die Aufblähkräfte können dabei bezüglich der Wertegröße und/ oder des Vorzeichens variiert, insbesondere oszillierend verändert, werden. Beim Vorliegen eines Minimums der Gesamtenergie wird die zuletzt berechnete parametrisch geschlossene Kurve $\underline{v}_t$ als optimale Lösung $\underline{v}_{opt}$ ausgegeben.

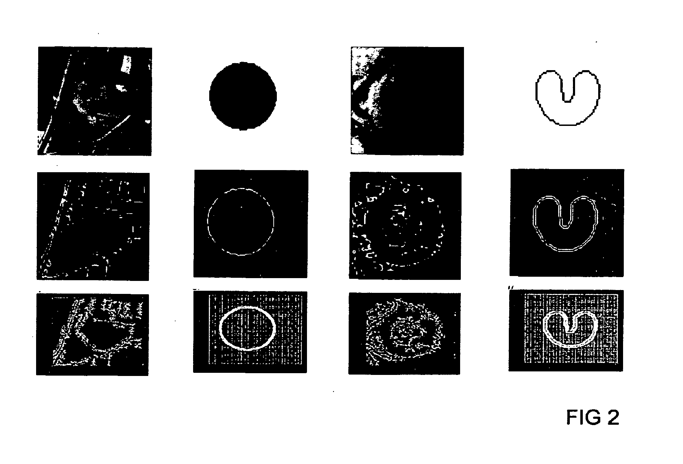

Die Fig. 2 zeigt die Ergebnisbilder vier verschiedener Objekte mit berechneten aktiven Konturen entlang der jeweiligen Objektkanten auf der Grundlage eines Gradientenfeldes und eines Gradientenfeldes mit Aufblähkräften. Das linke obere Bild zeigt eine 128x128 Pixel-Auflösung eines Fernerkundungsbildes. Der schwarze Kreis als Objekt besitzt eine 256x256 Pixel-Auflösung. Das dritte obere Bild zeigt eine Magnetresonanzabbildung der linken Herzklappenvene. Das rechte obere hufeisenförmige Bild besitzt wiederum eine 256x256 Pixel-Auflösung.

Die Ergebnisse der Gradientenfeldmethode sind für die jeweiligen Objekte nach fünf Deformationszyklen der ursprünglichen parametrisch geschlossenen Kurve $\underline{v}_0$ mit maximal 500 Iterationen in der mittleren Reihe gezeigt. Im Vergleich zu der zusätzlichen Beachtung von auf Aufblähkräften basierenden Energiefunktionen $E_{add}(\underline{v}t)$ der unteren Reihe ist erkennbar, dass die auf Aufblähkräften basierenden Formen der parametrisch geschlossenen Kurven $\underline{v}_t$ die Objektkanten besser abbilden.

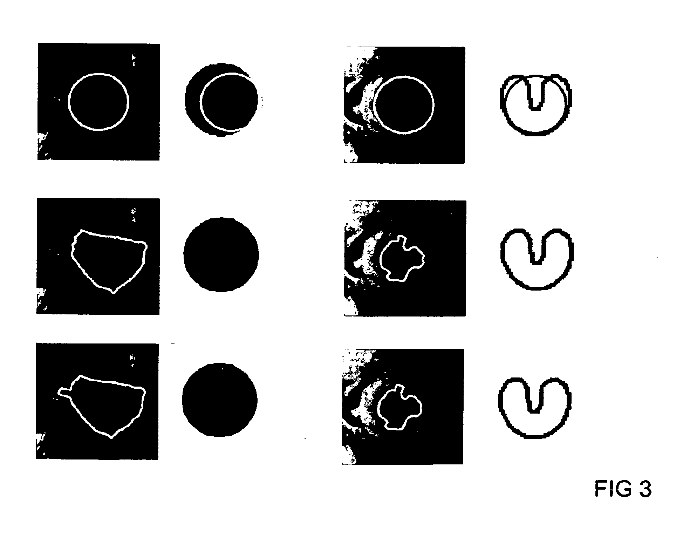

In der Fig. 3 sind Ergebnisbilder vier verschiedener Objekte mit berechneten aktiven Konturen entlang der Objektkanten auf der Grundlagen einer alternativen Vektorfeldüberlagerung (AVFC) und einer auf einem Yukawa-Potential basierenden alternativen Vektorfeldüberlagerung (YAVFC) gezeigt.

Ausgehend von einer ursprünglich kreisrunden parametrisch geschlossenen Kurve $\underline{v}_0$ für alle Objekte gemäß der oberen Reihe werden in der mittleren Reihe die aktiven Konturen mittels der alternativen Vektorfeldüberlagerung (AVFC) berechnet. Im Vergleich zu den Ergebnisbildern der letzten Reihe, die auf der Grundlage einer auf dem Yukawa-Potential basierenden alternativen Vektorfeldüberlagerung (YAVFC) berechnet wurden, wird deutlich, dass innerhalb der gleichen Anzahl von Iterationsschritten die auf dem Yukawa-Potential basierenden alternativen Vektorfeldüberlagerung (YAVFC) die beste Übereinstimmung zwischen der parametrisch geschlossenen Kurve $\underline{v}_t$ und der Objektkante aufweist. Gleichzeitig weisen die Ergebnisbilder der alternativen Vektorfeldüberlagerung (AVFC) der mittleren Reihe der Fig. 3 eine bessere Objektkantenerfassung als die herkömmliche Gradientenfeldmethode gemäß der mittleren Reihe der Fig. 2 auf.

Basierend auf einer bekannten Vektorfeldüberlagerung (Bing Li and Scott T. Acton " Field Convolution for Image Segmentation" IEEE Transactions on Image Processing, Vol. 16, No. 8, AUGUST 2007) wird die bekannte Vektorfeldüberlagerung mittels sogenannter Ballon-Kräfte als Aufblähkräfte erweitern und in einen oszillierenden Multiskalenansatz überführt. In Abhängigkeit der Iterationsschritte wird gemäß der vorliegenden Erfindung der erweiterte Multiskalenansatz durch eine dynamische Parametrisierung, insbesondere der Aufblähkräfte, erweitert. Die Methode gemäß der vorliegenden Erfindung bietet mit dem Multiskalenansatz den Vorteil, dass auf verschiedenen Skalenebenen die Übereinstimmung zwischen der parametrisch geschlossenen Kurve $\underline{v}_t$ und der Objektkante durch unterschiedliche Netzgrößen mit angepassten Energiefunktionen ermittelt werden kann. Falls eine genauere Bestimmung der parametrisch geschlossenen Kurve $\underline{v}_t$ in Relation zur Objektkante notwendig ist, kann mittels eines feineren Berechnungsnetzes mit angepassten Energiefunktionen die Übereinstimmung genauer bestimmt werden. Vorteilhafterweise kann im Rahmen des vorliegenden Verfahrens in Abhängigkeit der notwendigen Genauigkeit die Konvergenz der parametrisch geschlossenen Kurve $\underline{v}_t$ an die Objektkante aufgrund der Berechnung mittels unterschiedlich fein vernetzter Berechnungsnetze ermittelt werden. Durch die Substitution einiger, diskreter Teile in die Matrixdarstellung der parametrisch geschlossenen Kurve $\underline{v}_t$ werden rechentechnisch aufwändige Matrizeninversionen vermieden. Weiterhin sind durch die zusätzliche Implementierung des Yukawa-Potentials als zusätzliche Energiefunktion die Konvergenzeigenschaften der parametrisch geschlossenen Fläche $\underline{v}_t$ entlang der Objektkanten wesentlich verbessert.

**Patentansprüche**

1. Verfahren zur kantenbasierten Segmentierung von Daten durch Ermittlung einer Energiefunktion E ($\underline{v}_t$) einer parametrisch geschlossenen Fläche $\underline{v}_t$ bezüglich einer geschlossenen Kante in den Daten mit einer von der parametrisch geschlossenen Fläche $\underline{v}_t$ abhängigen inneren Energiefunktion $E_{int}$ ($\underline{v}_t$) und einer datenabhängigen Energiefunktion $E_{ext}$ ($\underline{v}_t$) und anschließender Ableitung eines Vektorfeldes aus der datenabhängigen Energiefunktion $E_{ext}$ ($\underline{v}_t$), wobei nachfolgend eine Bestimmung der Energiefunktion E ($\underline{v}_t$) der aufgrund des Vektorfeldes der datenabhängigen Energiefunktion $E_{ext}$ ($\underline{v}_t$) und der inneren Energiefunktion $E_{int}$ ($\underline{v}_t$) veränderten parametrisch geschlossenen Fläche $\underline{v}_t$ erfolgt und im Falle einer minimalen Energiefunktion E [$\underline{v}_t$ (x, y, z, t) ] bezüglich der geschlossenen Kante in den Daten die optimale parametrisch geschlossene Fläche $\underline{v}_{opt}$ ausgegeben wird, **dadurch gekennzeichnet, dass** vor der Ableitung des Vektorfeldes aus der datenabhängigen Energiefunktion $E_{ext}$ ($\underline{v}_t$) eine auf Aufblähkräften basierende zusätzliche Energiefunktion $E_{add}$ ($\underline{v}_t$) zu der datenabhängigen Energiefunktion $E_{ext}$ ($\underline{v}_t$) hinzugefügt und zur Bestimmung der Energiefunktion E ($\underline{v}_t$) eine iterative Oszillation der inneren Energiefunktion $E_{int}$ ($\underline{v}_t$) und der datenabhängigen Energiefunktion $E_{ext}$ ($\underline{v}_t$) auf der Basis der veränderten parametrisch geschlossenen Fläche $\underline{v}_t$ durchgeführt wird.

2. Verfahren nach Anspruch 1, **dadurch gekennzeichnet, dass** eine erste veränderte parametrisch geschlossene Fläche $\underline{v}_{t-1}$ bei einer ersten Iteration bezüglich auf Aufblähkräften basierenden zusätzlichen Energiefunktion $E_{add}$ ($\underline{v}_{t-1}$) auf der Basis vergrößernder Aufblähkräfte berechnet wird und die so veränderte parametrisch geschlossene Fläche $\underline{v}_{t-1}$ als Ausgangsfläche bei einer nachfolgenden Iteration auf der Grundlage der auf Aufblähkräften basierenden zusätzlichen Energiefunktion $E_{add}$($\underline{v}_t$) mit verkleinernden Aufblähkräfte als Teil der datenabhängigen Energiefunktion $E_{ext}$($\underline{v}_t$) genutzt wird.

3. Verfahren nach einem der Ansprüche 1 oder 2, **dadurch gekennzeichnet, dass** die Aufblähkräfte der zusätzlichen Energiefunktion $E_{add}$($\underline{v}_t$) an die jeweilige Iteration dynamisch angepasst werden.

4. Verfahren nach einem der Ansprüche 1 bis 3, **dadurch gekennzeichnet, dass** die datenabhängige Energiefunktion $E_{ext}$($\underline{v}_t$) bezogen auf die geschlossene Kante in den Daten auf der Basis des Yukawa-Potentials ermittelt wird.

5. Verfahren nach Anspruch 4, **dadurch gekennzeichnet, dass** die parametrisch geschlossene Fläche $\underline{v}_t$ mittels der nachfolgenden Gleichung zum jeweiligen Zeitpunkt t ermittelt wird:

$$\underline{v}_{t,j} = -\frac{1}{\gamma}\left((\underline{A}_j + \gamma \underline{I}_j)\underline{v}_{t-1,j} + \frac{-1^j\,k_1\,res_o}{res_j\sqrt{i_j}}\underline{n}_j(\underline{v}) - k\frac{f_j(\underline{v})\otimes\frac{-\underline{v}}{|\underline{v}|^2 e^{|\underline{v}|}+\varepsilon_2}}{\left|f_j(\underline{v})\otimes\frac{-\underline{v}}{|\underline{v}|^2 e^{|\underline{v}|}+\varepsilon_2}\right|}\right)$$

6. Verfahren nach einem der Ansprüche 1 bis 5, **dadurch gekennzeichnet, dass** die veränderte parametrisch geschlossene Fläche $\underline{v}_t$ als iterationsabhängige Matrix darstellbar und mittels algebraischer Operationen berechnet wird, wobei die Matrix in Submatrizen mit einer gleichen Anzahl von Zeilen und Spalten aufgeteilt und die jeweiligen Submatrizen als Grundlage zur Bestimmung der minimalen Energiefunktion E($\underline{v}_t$) verwendet werden.

7. Verfahren nach einem der Ansprüche 1 bis 6, **dadurch gekennzeichnet, dass** die Kantendaten entlang der geschlossenen Kante in Abhängigkeit der Datenwertunterschiede zu Daten nahe der geschlossenen Kante mit einer Wölbungsfunktion multipliziert und damit die Datenwertunterschiede der Kantendaten angepasst werden.

8. Verfahren nach einem der Ansprüche 1 bis 7, **dadurch gekennzeichnet, dass** das Rauschsignal in den Daten mittels einer Filterfunktion, insbesondere eines Gauß-Filters oder eines Median-Filters, minimiert wird.

9. Verfahren nach einem der Ansprüche 1 bis 8, **dadurch gekennzeichnet, dass** die geschlossene Kante in den Daten als quadratische Normalfunktion eines Gauß-Filters oder als inverse Intensitätsfunktion der Daten erfasst wird.

10. Verfahren nach einem der Ansprüche 1 bis 9, **dadurch gekennzeichnet, dass** bei Unterschreitung der Differenz $\triangle\underline{\mathbf{v}}_t= \underline{\mathbf{v}}_t - \underline{\mathbf{v}}_{t-1}$ unter eine vorgebbare Schwelle die zuletzt ermittelte parametrisch geschlossene Fläche $\underline{\mathbf{v}}_t$ als optimale parametrisch geschlossene Fläche $\underline{\mathbf{v}}_{opt}$ bestimmt wird.

11. Vorrichtung zur kantenbasierten Segmentierung von Daten mit einer Berechnungseinheit zur Ermittlung einer Energiefunktion $E(\underline{\mathbf{v}}_t)$ einer parametrisch geschlossenen Fläche $\underline{\mathbf{v}}_t$ bezüglich einer geschlossenen Kante in den Daten mit einer von der parametrisch geschlossenen Fläche $\underline{\mathbf{v}}_t$ abhängigen inneren Energiefunktion $E_{int}(\underline{\mathbf{v}}_t)$ und einer datenabhängigen Energiefunktion $E_{ext}(\underline{\mathbf{v}}_t)$, **dadurch gekennzeichnet, dass** die Berechnungseinheit bei der Ermittlung der Energiefunktion $E(\underline{\mathbf{v}}_t)$ eine auf Aufblähkräften basierenden zusätzlichen Energiefunktion $E_{add}(\underline{\mathbf{v}}_t)$ zu der datenabhängigen Energiefunktion $E_{ext}(\underline{\mathbf{v}}_t)$ berücksichtig, wobei die Berechnungseinheit die Größe der Aufblähkräfte an die jeweilige Iteration dynamisch anpasst.

12. Vorrichtung nach Anspruch 11, **dadurch gekennzeichnet, dass** die Berechnungseinheit eine iterative Oszillation der inneren Energiefunktion $E_{int}(\underline{\mathbf{v}}_t)$ und der datenabhängigen Energiefunktion $E_{ext}(\underline{\mathbf{v}}_t)$ auf der Basis der veränderten parametrisch geschlossenen Fläche $\underline{\mathbf{v}}_t$ durchführt.

13. Vorrichtung nach einem der Ansprüche 11 oder 12, **dadurch gekennzeichnet, dass** die Berechnungseinheit die datenabhängige Energiefunktion $E_{ext}(\underline{\mathbf{v}}_t)$ bezogen auf die geschlossene Kante in den Daten auf der Basis des Yukawa-Potentials ermittelt.

14. Vorrichtung nach einem der Ansprüche 11 bis 13 zur Durchführung des Verfahrens nach einem der Ansprüche 1 bis 10.

15. Computerprogramm mit Programmcode eingerichtet zur Durchführung des Verfahrens nach einem der Ansprüche 1 bis 10, wenn das Programm in einem Computer ausgeführt wird.

**Claims**

1. Method for edge- based segmentation of data by determining an energy function $E(\underline{\mathbf{v}}_t)$ of a parametrically closed surface $\underline{\mathbf{v}}_t$ with respect to a closed edge in the data, having an internal energy function $E_{int}(\underline{\mathbf{v}}_t)$ dependent on the parametrically closed surface $\underline{\mathbf{v}}_t$ and a data- dependent energy function $E_{ext}(\underline{\mathbf{v}}_t)$ and subsequent derivation of a vector field from the data- dependent energy function $E_{ext}(\underline{\mathbf{v}}_t)$, there subsequently being a determination of the energy function $E(\underline{\mathbf{v}}_t)$ of the parametrically closed surface $\underline{\mathbf{v}}_t$ altered on the basis of the vector field of the data-dependent energy function $E_{ext}(\underline{\mathbf{v}}_t)$ and the internal energy function $E_{int}(\underline{\mathbf{v}}_t)$, and in the case of a minimum energy function $E[\underline{\mathbf{v}}_t (x, y, z, t)]$ with respect to the closed edge in the data the optimum parametrically closed surface $\underline{\mathbf{v}}_{opt}$ is output, **characterized in that** before the derivation of the vector field from the data- dependent energy function $E_{ext}(\underline{\mathbf{v}}_t)$ an additional energy function $E_{add}(\underline{\mathbf{v}}_t)$ based on inflation forces is added to the data- dependent energy function $E_{ext}(\underline{\mathbf{v}}_t)$, and in order to determine the energy function $E(\underline{\mathbf{v}}_t)$ an iterative oscillation of the internal energy function $E_{int}(\underline{\mathbf{v}}_t)$ and of the data- dependent energy function $E_{ext}(\underline{\mathbf{v}}_t)$ is carried out on the basis of the altered parametrically closed surface $\underline{\mathbf{v}}_t$.

2. Method according to Claim 1, **characterized in that**, in a first iteration with respect to an additional energy function $E_{add}(\underline{\mathbf{v}}_{t-1})$ based on inflation forces, a first altered parametrically closed surface $\underline{\mathbf{v}}_{t-1}$ is calculated on the basis of increasing inflation forces, and the thus altered parametrically closed surface $\underline{\mathbf{v}}_{t-1}$ is used as initial surface in a subsequent iteration on the basis of the additional energy function $E_{add}(\underline{\mathbf{v}}_t)$, based on inflation forces, with decreasing inflation forces as part of the data-dependent energy function $E_{ext}(\underline{\mathbf{v}}_t)$.

3. Method according to either of Claims 1 and 2, **characterized in that** the inflation forces of the additional energy function $E_{add}(\underline{\mathbf{v}}_t)$ are dynamically adjusted to the respective iteration.

**4.** Method according to one of Claims 1 to 3, **characterized in that** the data-dependent energy function $E_{ext}(\underline{\mathbf{v}}_t)$ with respect to the closed edge in the data is determined on the basis of the Yukawa potential.

**5.** Method according to Claim 4, **characterized in that** the parametrically close surface $\underline{\mathbf{v}}_t$ is determined by means of the following equation relating to the respective instant t:

$$\underline{\mathbf{v}}_{t,j} = -\frac{1}{\gamma}((\underline{\mathbf{A}}_j + \gamma \underline{\mathbf{1}}_j)\underline{\mathbf{v}}_{t-1,j} + \frac{-1^j k_j \, res_o}{res_j \sqrt{i_j}}\underline{\mathbf{n}}_j(\underline{\mathbf{v}}) - k\frac{f_j(\underline{\mathbf{v}}) \otimes \frac{-x}{|y|^2 e^{b y} + \varepsilon_2}}{|f_j(\underline{\mathbf{v}}) \otimes \frac{-x}{|y|^2 e^{b y} + \varepsilon_2}|})$$

**6.** Method according to one of Claims 1 to 5, **characterized in that** the altered parametrically closed surface $\underline{\mathbf{v}}_t$ can be represented as an iteration-dependent matrix and is calculated by means of algebraic operations, the matrix being divided into submatrices with an equal number of rows and columns, and the respective submatrices being used as a basis for determining the minimum energy function $E(\underline{\mathbf{v}}_t)$.

**7.** Method according to one of Claims 1 to 6, **characterized in that** depending on the differences in data relative to data near the closed edge the edge data along the closed edge are multiplied by a curvature function, and the differences in data of the edge data are thereby adjusted.

**8.** Method according to one of Claims 1 to 7, **characterized in that** the noise signal in the data is minimized by means of a filter function, in particular a Gaussian filter or a median filter.

**9.** Method according to one of Claims 1 to 8, **characterized in that** the closed edge in the data is detected as a quadratic normal function of a Gaussian filter, or as an inverse intensity function of the data.

**10.** Method according to one of Claims 1 to 9, **characterized in that** upon undershooting of the difference $\Delta\underline{\mathbf{v}}_t = \underline{\mathbf{v}}_t - \underline{\mathbf{v}}_{t-1}$ below a prescribable threshold, the last determined parametrically closed surface $\underline{\mathbf{v}}_t$ is determined as optimum parametrically closed surface $\underline{\mathbf{v}}_{opt}$.

**11.** Apparatus for edge-based segmentation of data, having a calculating unit for determining an energy function $E(\underline{\mathbf{v}}_t)$ of a parametrically closed surface $\underline{\mathbf{v}}_t$ with respect to a closed edge in the data with the aid of an inner energy function $E_{int}(\underline{\mathbf{v}}_t)$ dependent on the parametrically closed surface $\underline{\mathbf{v}}_t$ and of a data-dependent energy function $E_{ext}(\underline{\mathbf{v}}_t)$, **characterized in that** when determining the energy function $E(\underline{\mathbf{v}}_t)$ the calculating unit takes account of an additional energy function $E_{add}(\underline{\mathbf{v}}_t)$ based on inflation forces in relation to the data-dependent energy function $E_{ext}(\underline{\mathbf{v}}_t)$, the calculating unit dynamically adjusting the magnitude of the inflation forces to the respective iteration.

**12.** Apparatus according to Claim 11, **characterized in that** the calculating unit carries out an iterative oscillation of the inner energy function $E_{int}(\underline{\mathbf{v}}_t)$ and the data-dependent energy function $E_{ext}(\underline{\mathbf{v}}_t)$ on the basis of the altered parametrically closed surface $\underline{\mathbf{v}}_t$.

**13.** Apparatus according to either of Claims 11 and 12, **characterized in that** the calculating unit determines the data-dependent energy function $E_{ext}(\underline{\mathbf{v}}_t)$ with respect to the closed edge in the data on the basis of the Yukawa potential.

**14.** Apparatus according to one of Claims 11 to 13 for carrying out the method according to one of Claims 1 to 10.

**15.** Computer program with program code set up to carry out the method according to one of Claims 1 to 10 when the program is executed in a computer.


**Revendications**

**1.** Procédé de segmentation de données en fonction des bords par détermination d'une fonction d'énergie E $(\underline{v}_t)$ d'une surface paramétrique fermée $\underline{v}_t$ par rapport à un bord fermé dans les données avec une fonction d'énergie interne

$E_{int}$ ($\underline{v}_t$) dépendant de la surface paramétrique fermée $\underline{v}_t$ et une fonction d'énergie $E_{ext}$ ($\underline{v}_t$) dépendant des données, avec ensuite dérivation d'un champ vectoriel à partie de la fonction d'énergie $E_{ext}$ ($\underline{v}_t$) dépendant des données, une détermination de la fonction d'énergie E ($\underline{v}_t$) de la surface paramétrique fermée $\underline{v}_t$ modifiée sur base du champ vectoriel de la fonction d'énergie $E_{ext}$ ($\underline{v}_t$) dépendant des données et de la fonction d'énergie interne $E_{int}$ ($\underline{v}_t$) ayant ensuite lieu, la surface paramétrique fermée $\underline{v}_{opt}$ étant fournie lorsque la fonction d'énergie E [$\underline{v}_t$ (x, y, z, t) ] est minimale par rapport au bord fermé des données, **caractérisé en ce que**

avant la dérivation du champ vectoriel à partir de la fonction d'énergie $E_{ext}$ ($\underline{v}_t$) dépendant des données, une fonction supplémentaire d'énergie $E_{add}$ ($\underline{v}_t$) basée sur des forces de dilatation est ajoutée à la fonction d'énergie $E_{ext}$ ($\underline{v}_t$) dépendant des données et

**en ce que** pour déterminer la fonction d'énergie E ($\underline{v}_t$), une oscillation itérative de la fonction d'énergie interne $E_{int}$ ($\underline{v}_t$) et de la fonction d'énergie $E_{ext}$ ($\underline{v}_t$) dépendant des données est réalisée sur base de la surface paramétrique fermée $\underline{v}_t$ modifiée.

2. Procédé selon la revendication 1, **caractérisé en ce que** dans une première itération appliquée sur la fonction d'énergie supplémentaire $E_{add}(\underline{v}_{t-1})$ basée sur les forces de dilatation, une première surface paramétrique fermée modifiée $\underline{v}_{t-1}$ est calculée sur la base d'une augmentation des forces de dilatation, la surface paramétrique fermée $\underline{v}_{t-1}$ ainsi modifiée étant utilisée comme surface de départ dans une itération ultérieure appliquée sur la fonction d'énergie $E_{add}(\underline{v}_t)$ basée sur les forces de dilatation avec des forces de dilatation réduites, comme partie de la fonction d'énergie $E_{ext}(\underline{v}_t)$ dépendant des données.

3. Procédé selon l'une des revendications 1 ou 2, **caractérisé en ce que** les forces de dilatation de la fonction d'énergie supplémentaire $E_{add}(\underline{v}_t)$ sont adaptées dynamiquement à chaque itération.

4. Procédé selon l'une des revendications 1 à 3, **caractérisé en ce que** la fonction d'énergie $E_{ext}(\underline{v}_t)$ par rapport au bord fermé des données est déterminée sur la base du potentiel de Yukawa.

5. Procédé selon la revendication 4, **caractérisé en ce que** la surface paramétrique fermée $\underline{v}_t$ est déterminée à chaque instant t au moyen de l'équation suivante :

$$\underline{v}_{t,j}' = -\frac{1}{\gamma}((\underline{A}_j + \gamma \underline{1}_j)\underline{v}_{t-1,j} + \frac{-1^j k_1 res_o}{res_j \sqrt{i_j}} \underline{n}_j(\underline{v}) - k \frac{f_j(\underline{v}) \otimes \frac{-\underline{v}}{|v|^2 e^{|v|} + \varepsilon_2}}{\left| f_j(\underline{v}) \otimes \frac{-\underline{v}}{|v|^2 e^{|v|} + \varepsilon_2} \right|})$$

6. Procédé selon l'une des revendications 1 à 5, **caractérisé en ce que** la surface paramétrique fermée $\underline{v}_t$ peut être représentée sous la forme d'une matrice dépendant des itérations et est calculée au moyen d'opérations algébriques, la matrice étant divisée en sous-matrices qui présentent un même nombre de lignes et de colonnes, chaque sous-matrice étant utilisée comme base pour la détermination de la fonction d'énergie minimale E($\underline{v}_t$).

7. Procédé selon l'une des revendications 1 à 6, **caractérisé en ce que** les données de bord correspondant au bord fermé sont multipliées par une fonction de courbure en fonction des différences de valeur des données par rapport à des données proches du bord fermé, les différences de valeur des données étant ainsi adaptées aux données de bord.

8. Procédé selon l'une des revendications 1 à 7, **caractérisé en ce que** le signal de bruit présent dans les données est minimisé au moyen d'une fonction de filtrage, en particulier d'un filtre de Gauss ou d'un filtre médian.

9. Procédé selon l'une des revendications 1 à 8, **caractérisé en ce que** le bord fermé des données est saisi comme fonction quadratique normale d'un filtre de Gauss ou comme fonction inverse de l'intensité des données.

10. Procédé selon l'une des revendications 1 à 9, **caractérisé en ce que** lorsque la différence $\Delta \underline{v}_t = \underline{v}_t - \underline{v}_{t-1}$ n'atteint pas un seuil prédéterminé, la surface paramétrique fermée $\underline{v}_t$ déterminée en dernier lieu est déterminée comme étant la surface paramétrique fermée optimale $\underline{v}_{opt}$.

**11.** Dispositif de segmentation de données en fonction des bords, présentant une unité de calcul servant à déterminer une fonction d'énergie $E(\underline{v}_t)$ d'une surface paramétrique fermée $\underline{v}_t$ par rapport à un bord fermé dans les données avec une fonction d'énergie interne $E_{int}(\underline{v}_t)$ dépendant de la surface paramétrique fermée $\underline{v}_t$ et une fonction d'énergie $E_{ext}(\underline{v}_t)$ dépendant des données, **caractérisé en ce que**

dans la détermination de la fonction d'énergie $E(\underline{v}_t)$, en plus de la fonction d'énergie $E_{ext}(\underline{v}_t)$ dépendant des données, l'unité de calcul tient compte d'une fonction d'énergie $E_{add}(\underline{v}_t)$ basée sur des forces de dilatation, l'unité de calcul adaptant dynamiquement la taille des forces de dilatation lors de chaque itération.

**12.** Dispositif selon la revendication 11, **caractérisé en ce que** l'unité de calcul exécute une oscillation itérative de la fonction d'énergie interne $E_{int}(\underline{v}_t)$ et de la fonction d'énergie $E_{ext}(\underline{v}_t)$ dépendant des données sur la base de la surface paramétrique fermée $\underline{v}_t$ modifiée.

**13.** Dispositif selon l'une des revendications 11 ou 12, **caractérisé en ce que** l'unité de calcul détermine la fonction d'énergie $E_{ext}(\underline{v}_t)$ dépendant des données par rapport au bord fermé des données sur la base du potentiel de Yukawa.

**14.** Dispositif selon l'une des revendications 11 à 13 en vue de la mise en oeuvre du procédé selon l'une des revendications 1 à 10.

**15.** Programme informatique doté de codes de programme conçu pour mettre en oeuvre le procédé selon l'une des revendications 1 à 10 lorsque le programme est exécuté sur un ordinateur.

```
                    ┌─────────────────────┐
                    │        Start         │
                    └─────────────────────┘
                               │
                               ▼
                    ┌─────────────────────┐
                    │  Bestimmung der      │
                    │  Bildenergie         │
                    │  E_ext(v(x,y,z,t))   │
                    └─────────────────────┘
                               │
                               ▼
         ┌─────────────────────────────────────────────┐
         │          VFC-Gleichungssystem                │
         │     + iterationsabhängige Aufblähkräfte      │
         │  + auf YUKAWA Potential basierendes Vektorfeld│
         └─────────────────────────────────────────────┘
                               │
                               ▼
              ┌─────────────────────────────────┐
              │ Festlegung der Ausgangskontur v_0│
              └─────────────────────────────────┘
                               │
                               ▼ ◄──────────────────────────┐
              ┌─────────────────────────────────┐           │
              │   Ermittlung der Aufblähkräfte   │           │
              └─────────────────────────────────┘   ┌─────────────────┐
                               │                     │   Oszillation/  │
                               ▼                     │   Invertierung  │
              ┌─────────────────────────────────┐    │  Aufblähkräfte  │
              │ Bestimmung der aktuellen Kontur v_t│  └─────────────────┘
              └─────────────────────────────────┘           ▲
                               │                             │
                               ▼                             │
                         ╱───────────╲        nein           │
                       ╱   min E(v_t)  ╲──────────────────────┘
                       ╲       ?       ╱
                         ╲───────────╱
                               │ ja
                               ▼
              ┌─────────────────────────────────┐
              │  Anzeige der Lösungskontur v_opt │
              └─────────────────────────────────┘
                               │
                               ▼
                    ┌─────────────────────┐
                    │        Ende          │
                    └─────────────────────┘
```

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5768313 A
- DE 19915858 A1
- DE 10358544 A1
- US 6031935 A
- WO 2005083635 A1
- US 20060013482 A1
- EP 1603076 A1
- US 2003052883 A1

**In der Beschreibung aufgeführte Nicht-Patentliteratur**

- **M. KASS ; A. WITKIN ; D. TERZOPOULOS.** Snakes-active contour models. *Int. J. Comput. Vis.,* 1987, vol. 1, 321
- **BING LI ; SCOTT T. ACTON.** Field Convolution for Image Segmentation. *IEEE Transactions on Image Processing,* August 2007, vol. 16 (8